# FASCICULE DE BREVET EUROPEEN

(11) **EP 3 757 012 B1**
(45) Date de publication et mention de la délivrance du brevet: **30.03.2022**
(21) Numéro de dépôt: 20181681.6
(22) Date de dépôt: 23.06.2020
(51) Int. Cl.: B64D 27/10, B64D 27/12, B64D 27/16, B64D 27/18, B64D 27/26

(54) **ENSEMBLE PROPULSEUR D'AÉRONEF COMPORTANT UNE STRUCTURE PRIMAIRE DE MÂT ET UNE ATTACHE MOTEUR AVANT AMÉLIORÉES**
FLUGZEUGANTRIEBSSYSTEM MIT VERBESSERTER PRIMÄRMASTSTRUKTUR UND VORDERER TRIEBWERKSBEFESTIGUNG
AIRCRAFT PROPELLER ASSEMBLY COMPRISING IMPROVED PRIMARY MAST STRUCTURE AND FRONT ENGINE MOUNT

(30) Priorité: 25.06.2019 FR 1906859
(43) Date de publication de la demande: 30.12.2020
(73) Titulaire: Airbus Operations SAS, 31060 Toulouse (FR)
(72) Inventeur: JOURNADE, Frédéric, 31060 TOULOUSE (FR); CAYSSIALS, Julien, 31060 TOULOUSE (FR); GELIOT, Jean, 31060 TOULOUSE (FR); DEFORET, Thomas, 31060 TOULOUSE (FR)
(74) Mandataire: Fantin, Laurent

(56) Documents cités:
- EP-A1- 1 053 937
- EP-A1- 1 571 081
- EP-B1- 1 053 937
- FR-A1- 2 887 853

## Description

La présente demande se rapporte à un ensemble propulsif d'aéronef comportant une structure primaire de mât et une attache moteur avant améliorées.

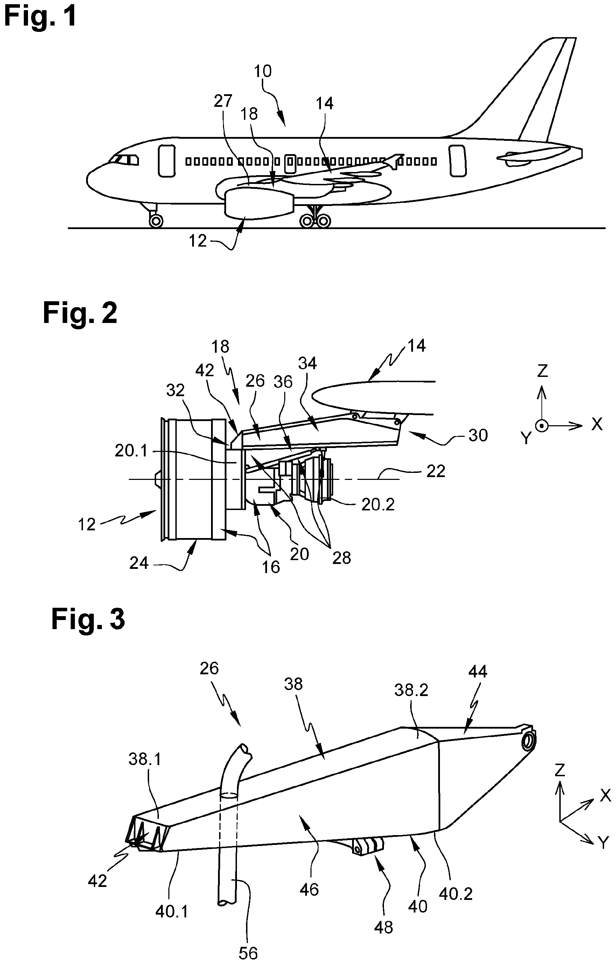

Selon un mode de réalisation visible sur les figures 1 et 2, un aéronef 10 comprend plusieurs ensembles propulseurs 12 positionnés sous chacune des ailes 14 de l'aéronef. Chaque ensemble propulseur 12 comprend un moteur 16, une nacelle (non représentée sur la figure 2) positionnée autour du moteur 16 ainsi qu'un mât 18 reliant le moteur 16 et l'aile 14. Comme illustré sur la figure 2, le moteur 16 comprend un cœur de réacteur 20, qui comporte notamment un rotor pivotant par rapport à un stator selon un axe de rotation 22, ainsi qu'un carter de soufflante 24 qui a approximativement une forme cylindrique et dans lequel est positionnée une soufflante reliée au rotor du cœur de réacteur 20 du moteur 16. Le cœur de réacteur 20 s'étend d'un carter avant 20.1, qui comprend une admission d'air, jusqu'à un carter arrière 20.2 qui comprend un échappement des gaz de combustion.

Pour la présente demande, une direction longitudinale X est confondue avec l'axe de rotation 22 du moteur 16, une direction transversale horizontale Y est horizontale et perpendiculaire à l'axe de rotation 22 du moteur 16, une direction transversale verticale Z est verticale et perpendiculaire à l'axe de rotation 22 du moteur 16. Un plan transversal est perpendiculaire à la direction longitudinale X. Les notions avant et arrière font référence au sens d'écoulement des gaz, l'avant correspondant à l'admission des gaz (air) dans le moteur et l'arrière correspondant à l'échappement des gaz (gaz de combustion).

Le mât 18 comprend une structure primaire 26 qui est reliée au moteur 16 par une attache moteur 28 et à l'aile 14 par une attache voilure 30 ainsi qu'une structure secondaire 27 (visible sur la figure 1) qui enveloppe la structure primaire 26 et qui limite la traînée du mât 18.

L'attache moteur 28 comprend une attache moteur avant 32, une attache moteur arrière 34 et un couple de bielles de poussée 36 assurant la reprise des efforts de poussée.

Selon un mode de réalisation visible sur la figure 3, la structure primaire 26 comprend un longeron supérieur 38, un longeron inférieur 40, des cadres transversaux qui relient les longerons supérieur et inférieur 38, 40, qui sont disposés dans des plans transversaux et ont chacun un contour approximativement carré ou rectangulaire, une paroi d'extrémité avant 42 qui relie une extrémité avant 38.1 du longeron supérieur 38 et une extrémité avant 40.1 du longeron inférieur 40, une partie d'extrémité arrière 44 qui relie une extrémité arrière 38.2 du longeron supérieur 38 et une extrémité arrière 40.2 du longeron inférieur 40, ainsi que deux panneaux latéraux 46 disposés de part et d'autre des cadres transversaux reliant les longerons supérieur et inférieur 38, 40.

Selon une première configuration visible sur la figure 2 et décrite dans le document FR-2.963.320, l'attache moteur arrière 34 relie une partie intermédiaire 48 de la structure primaire 26 du mât 18 et le carter arrière 20.2 du cœur de réacteur 20 du moteur 16, l'attache moteur avant 32 relie la paroi d'extrémité avant 42 de la structure primaire 26 et le carter avant 20.1 du cœur de réacteur 20 du moteur 16 et enfin les bielles de poussée 36 relient la partie intermédiaire 48 de la structure primaire 26 et le carter avant 20.1 du cœur de réacteur 20 du moteur 16. Selon cette configuration, la paroi d'extrémité avant 42 est située quasiment à l'aplomb ou faiblement écartée, selon la direction longitudinale X, du point d'ancrage de l'attache moteur avant 32 au niveau du moteur 16.

Selon un premier inconvénient lié à cette première configuration, la zone située entre le cœur de réacteur 20 du moteur et la structure primaire 26 est réduite et ne permet pas l'intégration d'équipements complémentaires au moteur qui sont par conséquent positionnés au-dessus de la structure primaire 26 du mât. Cette implantation conduit à augmenter le volume de la structure secondaire 27 et impacte la traînée de l'aéronef.

Selon un autre inconvénient, cette variante conduit à prévoir une distance relativement importante entre le cœur de réacteur 20 du moteur et la voilure 14.

Pour remédier à ces inconvénients, selon une deuxième configuration visible sur la figure 4 et décrite dans le document FR3040369, une attache moteur avant 28 comprend au moins une bielle avant 50 qui relie la paroi d'extrémité avant 42 de la structure primaire 26 et le cœur de réacteur 20 du moteur 16 ainsi qu'au moins une liaison avant 52 qui relie la structure primaire du mât et le carter de soufflante 24 du moteur 16.

Selon cette deuxième configuration, chaque bielle avant 50 est reliée à une première extrémité à la paroi d'extrémité avant 42 de la structure primaire 26 par une première liaison pivotante 50.1 selon la direction transversale horizontale Y et à une seconde extrémité au cœur de réacteur 20 du moteur 16 par une deuxième liaison pivotante 50.2 selon la direction transversale horizontale Y.

En complément, la liaison avant 52 comprend deux bielles latérales 54, chacune d'elles comprenant une première extrémité reliée à la paroi d'extrémité avant 42 de la structure primaire 26 par une liaison pivotante 54.1 parallèle à la direction longitudinale X et une seconde extrémité reliée au carter de soufflante 24 par une liaison pivotante 54.2 parallèle à la direction longitudinale X.

Cette deuxième configuration permet de pouvoir loger au moins un équipement complémentaire dans une zone située entre le cœur de réacteur 20 du moteur 16 et la structure primaire 26 du mât 18. De plus, l'extrémité avant de la structure primaire 26 étant décalée vers le haut par rapport à l'attache moteur arrière 34, la distance séparant le cœur de réacteur 20 du moteur 16 et la voilure 14 est réduite.

Malgré ces avantages, la reprise des efforts n'est pas optimale et l'intégration des équipements, notamment d'un conduit d'air chaud 56 au niveau de la partie avant de la structure primaire 26 est relativement complexe.

Le document EP1571081 propose une attache moteur qui comprend une attache moteur avant assurant également la reprise des efforts de poussée ainsi qu'une attache moteur arrière. Selon ce document, l'attache moteur avant comprend un prolongement positionné à l'avant de la structure primaire du mât, présentant une première extrémité reliée à la structure primaire du mât et une deuxième extrémité distante de la structure primaire du mât et reliée au cœur de réacteur du moteur par une liaison moteur. L'attache moteur avant comprend également une biellette comportant une première extrémité reliée à la structure primaire du mât par une liaison pivotante orientée verticalement et une deuxième extrémité reliée au carter de soufflante par une attache souple.

Ce mode de réalisation induit une liaison moteur complexe entre le prolongement et le cœur de réacteur du moteur.

La présente invention vise à remédier à tout ou partie des inconvénients de l'art antérieur.

A cet effet, l'invention a pour objet un ensemble propulseur d'aéronef comprenant un moteur présentant un cœur de réacteur et un carter de soufflante, une structure primaire d'un mât ainsi qu'une attache moteur présentant une attache moteur arrière, un couple de bielles de poussée, une première attache moteur avant reliant la structure primaire et le cœur de réacteur ainsi qu'une deuxième attache moteur avant reliant la structure primaire et le carter de soufflante.

Selon l'invention, la première attache moteur avant comprend :
- un prolongement positionné à l'avant de la structure primaire, présentant une première extrémité reliée à la structure primaire et une deuxième extrémité distante de la structure primaire,
- au moins une manille,
- une première liaison pivotante glissante orientée selon une direction longitudinale parallèle à un axe de rotation du moteur, présentant un premier axe de pivotement approximativement parallèle à la direction longitudinale, reliant la deuxième extrémité du prolongement ainsi que la manille et intégrant une rotule,
- au moins une liaison moteur reliant la manille et le cœur de réacteur du moteur.

En complément, la deuxième attache moteur avant comprend :
- une biellette qui s'étend entre des première et deuxième extrémités,
- une deuxième liaison pivotante glissante orientée selon la direction longitudinale, présentant un deuxième axe de pivotement approximativement parallèle à la direction longitudinale, reliant la deuxième extrémité de la biellette ainsi que le carter de soufflante et intégrant une rotule,
- au moins une liaison pivotante, présentant un axe de pivotement approximativement parallèle à une direction transversale horizontale, reliant la première extrémité de la biellette et la structure primaire.

Cette configuration permet d'optimiser la reprise des efforts par les première et deuxième attaches moteurs avant. De plus, le prolongement et la biellette permettent de réduire la longueur de la structure primaire et d'en simplifier sa conception.

Selon une autre caractéristique, la première attache moteur avant comprend deux liaisons moteurs espacées selon la direction transversale horizontale, comportant chacune un axe de liaison orienté de manière parallèle à la direction longitudinale, un orifice traversant dans la manille pour loger une partie de l'axe de liaison et un orifice traversant dans au moins une aile solidaire du cœur de réacteur du moteur pour loger une partie de l'axe de liaison.

Selon une autre caractéristique, la manille est disposée dans un plan approximativement transversal, est triangulaire et comprend à un premier sommet un orifice traversant pour la première liaison pivotante glissante et aux autres sommets les orifices traversants des liaisons moteurs.

Selon une autre caractéristique, chaque liaison moteur comprend une rotule intercalée entre l'axe de liaison et l'orifice traversant de la manille.

Selon une autre caractéristique, la première liaison pivotante glissante comprend un premier axe cylindrique solidaire du prolongement ainsi qu'une première bague de guidage comportant une rotule, positionnée dans un orifice traversant de la manille et configurée pour loger le premier axe cylindrique.

Selon une autre caractéristique, le prolongement comprend des premier et deuxième renforts triangulaires comportant chacun un premier côté positionné contre une paroi d'extrémité avant de la structure primaire, prolongeant un premier panneau latéral de la structure primaire pour le premier renfort triangulaire et un deuxième panneau latéral de la structure primaire pour le deuxième renfort triangulaire, un deuxième côté prolongeant un longeron inférieur de la structure primaire ainsi qu'un troisième côté relié au deuxième côté au niveau d'un sommet distant du premier côté, les sommets des premier et deuxième renforts triangulaires étant reliés entre eux pour former la deuxième extrémité du prolongement.

Selon une autre caractéristique, la deuxième attache moteur avant comprend deux liaisons pivotantes espacées selon la direction transversale horizontale.

Selon une autre caractéristique, la biellette comprend des premier et deuxième renforts présentant chacun une première extrémité reliée à la structure primaire par l'une des liaisons pivotantes et une deuxième extrémité orientée vers le carter de soufflante, les deuxièmes extrémités des premier et deuxième renforts étant reliées entre elles pour former la deuxième extrémité de la biellette.

Selon une autre caractéristique, la biellette comprend un renfort transversal reliant les premier et deuxième renforts à proximité de leurs premières extrémités.

Selon une autre caractéristique, la deuxième liaison pivotante glissante comprend un deuxième axe cylindrique solidaire de la deuxième extrémité de la biellette ainsi qu'une deuxième bague de guidage comportant une rotule positionnée dans un orifice traversant d'au moins une aile solidaire du carter de soufflante et configurée pour loger le deuxième axe cylindrique.

Selon une autre caractéristique, l'aile comprend deux parties présentant un plan de jonction positionné de manière à séparer l'orifice traversant en deux demi-cylindres, ainsi que des éléments de liaison configurés pour maintenir les deux parties de l'aile assemblées. L'invention a également pour objet un aéronef comprenant au moins un ensemble propulseur selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue latérale d'un ensemble propulseur d'aéronef sans nacelle qui illustre une première configuration de l'art antérieur,
- La figure 3 est une vue en perspective d'une structure primaire d'un mât d'aéronef qui illustre un mode de réalisation de l'art antérieur,
- La figure 4 est une vue latérale d'un ensemble propulseur d'aéronef sans nacelle qui illustre une deuxième configuration de l'invention,
- La figure 5 est une représentation schématique en perspective d'un ensemble propulseur d'aéronef qui illustre un mode de réalisation de l'invention,
- La figure 6 est une représentation schématique en perspective d'une attache moteur qui illustre un mode de réalisation de l'invention,
- La figure 7 est une vue en perspective d'une première attache moteur avant qui illustre un mode de réalisation de l'invention
- La figure 8 est une vue de face d'une partie de la première attache moteur avant visible sur la figure 7,
- La figure 9 est une vue en perspective d'une deuxième attache moteur avant qui illustre un mode de réalisation selon l'invention, et
- La figure 10 est une vue en perspective d'une partie de la deuxième attache moteur avant visible sur la figure 9.

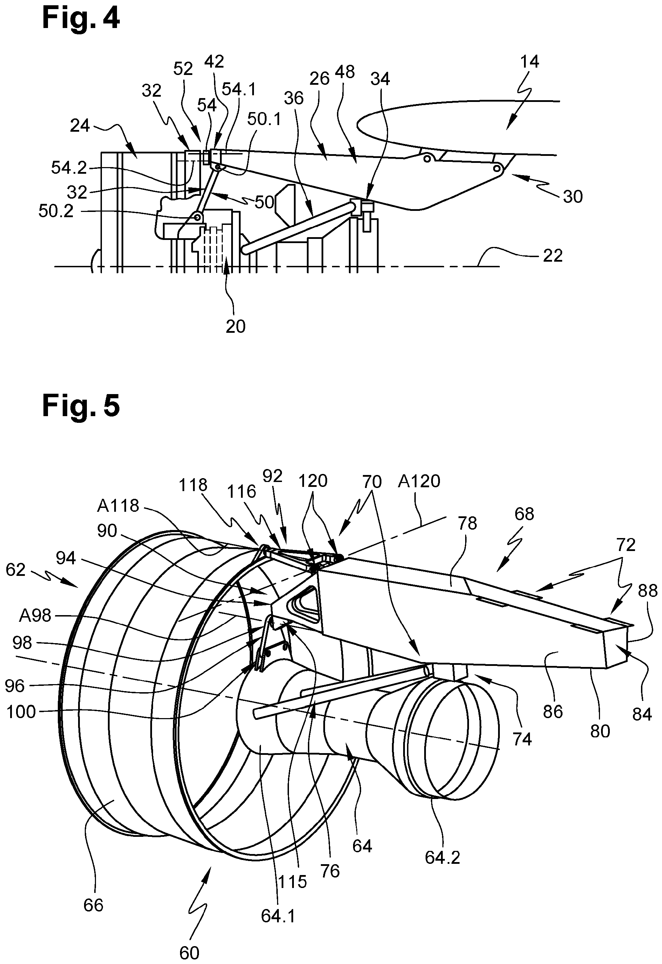

Sur la figure 5, on a représenté un ensemble propulseur 60 d'un aéronef qui comprend un moteur 62, une nacelle (non représentée) positionnée autour du moteur 62 ainsi qu'un mât reliant le moteur 62 et une aile de l'aéronef.

Le moteur 62 comprend un cœur de réacteur 64 qui s'étend d'un carter avant 64.1 jusqu'à un carter arrière 64.2 ainsi qu'un carter de soufflante 66.

Le mât comprend une structure primaire 68 reliée au moteur 64 par une attache moteur 70 et à l'aile par une attache voilure 72 ainsi qu'une structure secondaire qui enveloppe la structure primaire 68 et qui limite la traînée du mât.

Comme illustré sur la figure 2, l'attache moteur 70 comprend une attache moteur arrière 74 et un couple de bielles de poussée 76 assurant la reprise des efforts de poussée.

La structure primaire 68 comprend un longeron supérieur 78, un longeron inférieur 80, des cadres transversaux qui relient les longerons supérieur et inférieur 78, 80, qui sont disposés dans des plans transversaux et qui ont chacun un contour approximativement carré ou rectangulaire, une paroi d'extrémité avant 82 qui relie une extrémité avant du longeron supérieur 78 et une extrémité avant du longeron inférieur 80, une partie d'extrémité arrière 84 qui relie une extrémité arrière du longeron supérieur 78 et une extrémité arrière du longeron inférieur 80, ainsi que des premier et deuxième panneaux latéraux 86, 88 disposés de part et d'autre des cadres transversaux reliant les longerons supérieur et inférieur 78, 80. L'attache moteur 70 comprend une première attache moteur avant 90 reliant la paroi d'extrémité avant 82 et le cœur de réacteur 64 du moteur, plus particulièrement le carter avant 64.1 du cœur de réacteur 64 du moteur 62, ainsi qu'une deuxième attache moteur avant 92 reliant directement ou indirectement la paroi d'extrémité avant 82 et le carter de soufflante 66.

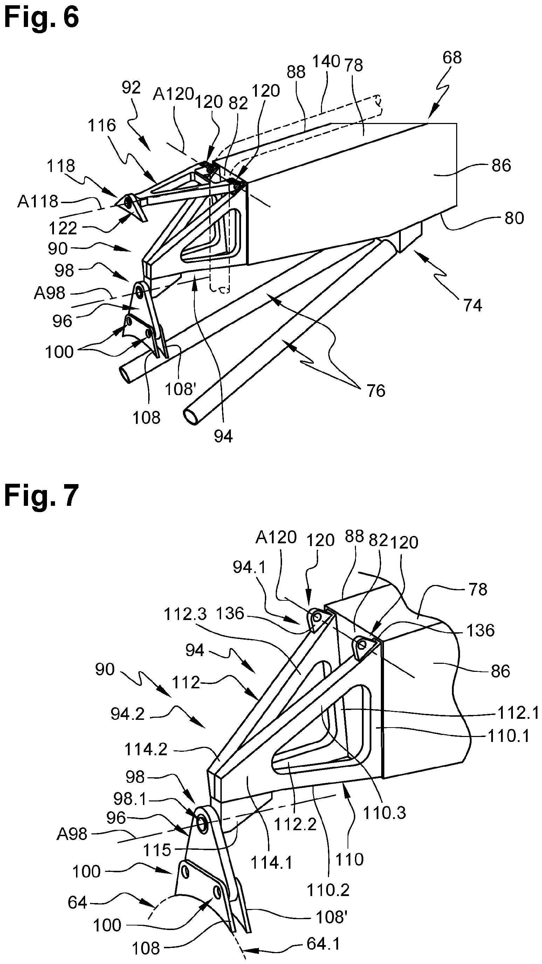

Comme illustré sur la figure 7, la première attache moteur avant 90 comprend un prolongement 94 positionné à l'avant de la structure primaire 68, présentant une première extrémité 94.1 reliée à la structure primaire 68 et une deuxième extrémité 94.2 distante de la structure primaire 68, au moins une manille 96, une première liaison pivotante glissante 98 orientée selon la direction longitudinale X, présentant un premier axe de pivotement A98 approximativement parallèle à la direction longitudinale X, reliant la deuxième extrémité 94.2 du prolongement 94 et la manille 96 et intégrant une rotule, ainsi qu'au moins une liaison moteur 100 reliant la manille 96 et le cœur de réacteur 64 du moteur configurée pour assurer la reprise des efforts selon les directions transversales horizontale et verticale Y, Z. Par approximativement parallèle à la direction longitudinale X, on entend que le premier axe de pivotement A98 peut ne pas être parfaitement parallèle à la direction longitudinale X et former un très faible angle en fonction des intervalles de tolérance de fabrication.

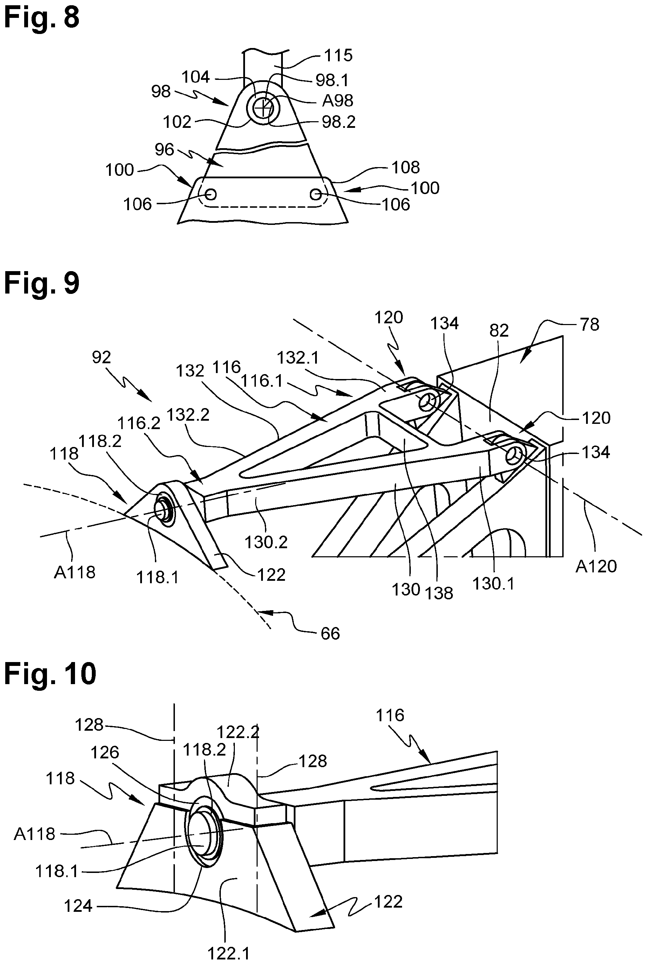

Selon une configuration visible sur la figure 8, la première liaison pivotante glissante 98 comprend un premier axe cylindrique 98.1 solidaire du prolongement 94 et un premier logement 98.2 prévu au niveau de la manille 96. Selon un mode de réalisation visible sur la figure 7, la manille 96 comprend un orifice traversant 102 dans lequel est positionnée une première bague de guidage rotulée 104 intégrant une rotule et configurée pour former le premier logement 98.2 de la première liaison pivotante glissante 98.

Selon une configuration, la première attache moteur avant 90 comprend deux liaisons moteurs 100 espacées selon la direction transversale horizontale Y, comportant chacune un axe de liaison 106 orienté de manière quasi parallèle à la direction longitudinale X, un orifice traversant dans la manille 96 pour loger une partie de l'axe de liaison 106 et un orifice traversant dans au moins une aile 108 solidaire du cœur de réacteur 64 du moteur pour loger une partie de l'axe de liaison 106. Chaque liaison moteur 100 comprend une rotule intercalée entre l'axe de liaison 106 et l'orifice traversant de la manille 96.

Selon un mode de réalisation, le carter avant 64.1 du cœur de réacteur 64 du moteur comprend deux ailes 108, 108', qui forment une chape, disposées dans des plans transversaux, parallèles et faiblement espacées. L'espacement entre les ailes 108, 108' est supérieur à l'épaisseur de la manille 96 de sorte que cette dernière se loge entre les deux ailes 108, 108' et puisse s'incliner plus ou moins par rapport à l'axe de liaison 106 grâce à la rotule.

Selon un mode de réalisation, la manille 96 est disposée dans un plan approximativement transversal. Elle est triangulaire et comprend à un premier sommet l'orifice traversant 102 de la première liaison pivotante glissante 98 et aux autres sommets les orifices traversants des liaisons moteurs 100.

Selon un mode de réalisation, le prolongement 94 comprend des premier et deuxième renforts triangulaires 110, 112 comportant chacun un premier côté 110.1, 112.1 positionné contre la paroi d'extrémité avant 82, dans le prolongement du premier panneau latéral 86 pour le premier renfort triangulaire 100 et du deuxième panneau latéral 88 pour le deuxième renfort triangulaire 112, un deuxième côté 110.2, 112.2 dans le prolongement du longeron inférieur 80 ainsi qu'un troisième côté 110.3, 112.3 relié au deuxième côté 110.2, 112.2 au niveau d'un sommet 114.1, 114.2 distant du premier côté 110.1, 112.1, les sommets 114.1, 114.2 des premier et deuxième renforts triangulaires 110, 112 étant reliés entre eux pour former la deuxième extrémité 94.2 du prolongement 94. Selon un agencement, le premier côté 110.1, 112.1 des premier et deuxième renforts triangulaires 110, 112 s'étend du longeron supérieur 78 jusqu'au longeron inférieur 80 de la structure primaire 68. Chacun des premier et deuxième renforts triangulaires 110, 112 est relié à la paroi d'extrémité avant 82 de la structure primaire 68 par tout moyen approprié, comme par vissage, rivetage, soudage ou autres.

Les premier et deuxième renforts triangulaires 110, 112 sont évidés.

Le prolongement 94 comprend également une platine 115, positionnée au niveau de la deuxième extrémité 94.2 du prolongement 94, reliée à cette dernière par tout moyen approprié, comme par vissage, rivetage, soudage ou autres. La platine 115 comprend une face avant positionnée dans un plan approximativement transversal présentant en saillie le premier axe cylindrique 98.1 de la première liaison pivotante glissante 98.

Comme illustré sur la figure 9, la deuxième attache moteur avant 92 comprend une biellette 116 qui s'étend entre des première et deuxième extrémités 116.1, 116.2, une deuxième liaison pivotante glissante 118 orientée selon la direction longitudinale X, présentant un deuxième axe de pivotement A118, approximativement parallèle à la direction longitudinale X, reliant la deuxième extrémité 116.2 de la biellette 116 et le carter de soufflante 66 et intégrant une rotule ainsi qu'au moins une liaison pivotante 120, présentant un axe de pivotement A120, approximativement parallèle à la direction transversale horizontale Y, reliant la première extrémité 116.1 de la biellette 116 et la structure primaire 68.

Par approximativement parallèle à la direction longitudinale X, on entend que le deuxième axe de pivotement A118 peut ne pas être parfaitement parallèle à la direction longitudinale X et former un très faible angle en fonction des intervalles de tolérance de fabrication.

Par approximativement parallèle à la direction transversale horizontale Y, on entend que le deuxième axe de pivotement A118 peut ne pas être parfaitement parallèle à la direction transversale horizontale Y et former un très faible angle en fonction des intervalles de tolérance de fabrication.

Selon une configuration, la deuxième liaison pivotante glissante 118 comprend un deuxième axe cylindrique 118.1 solidaire de la deuxième extrémité 116.2 de la biellette 116 et un deuxième logement 118.2 prévu au niveau d'au moins une aile 122 solidaire du carter de soufflante 66. Selon un mode de réalisation visible sur la figure 8, l'aile 122 solidaire du carter de soufflante 66 comprend un orifice traversant 124 dans lequel est positionnée une deuxième bague de guidage rotulée 126 intégrant une rotule et configurée pour former le deuxième logement 118.2 de la deuxième liaison pivotante glissante 118.

Selon un mode de réalisation, l'aile 112 est positionnée dans un plan approximativement transversal.

Selon un mode de réalisation illustré par la figure 10, l'aile 122 comprend deux parties 122.1, 122.2 présentant un plan de jonction PJ positionné de manière à séparer l'orifice traversant 124 en deux demi-cylindres, ainsi que des éléments de liaison 128, comme des vis par exemple, configurés pour maintenir les deux parties 122.1, 122.2 de l'aile 122 assemblées. Le fait de prévoir une aile 122 en deux parties permet de simplifier l'assemblage de la biellette 116. Selon un mode opératoire, la biellette 116 est reliée dans un premier temps à la structure primaire 68 grâce aux liaisons pivotantes 120. La deuxième partie 122.2 de l'aile 122 étant démontée, le deuxième axe cylindrique 118.1 est inséré dans la deuxième bague de guidage rotulée 126 qui est en suivant positionnée dans le demi-cylindre de la deuxième partie 122.2 de l'aile 122 formant une partie du deuxième logement 118.2. Enfin, la deuxième partie 122.2 de l'aile 122 est fixée à la première partie 122.1 de l'aile 122.

Si l'aile 122 est réalisée en une seule pièce, le deuxième axe cylindrique 118.1 est positionné dans la deuxième bague de guidage rotulée 126 qui est positionnée dans l'orifice traversant de l'aile 122. En suivant, la première extrémité 116.1 de la biellette 116 est reliée à la structure primaire 68 grâce aux liaisons pivotantes 120.

Selon une configuration, la biellette 116 est triangulaire et la deuxième attache moteur avant 92 comprend deux liaisons pivotantes 120 espacées selon la direction transversale horizontale Y. Cet agencement contribue à une meilleure reprise des efforts selon la direction transversale horizontale Y. Selon un mode de réalisation, la biellette 116 comprend des premier et deuxième renforts 130, 132 présentant chacun une première extrémité 130.1, 132.1 reliée à la structure primaire 68 par l'une des liaisons pivotantes 120 et une deuxième extrémité 130.2, 132.2 orientée vers le carter de soufflante 66, les premières extrémités 130.1, 132.1 des première et deuxième renforts 130, 132 étant espacées selon la direction transversale horizontale Y, les deuxièmes extrémités 130.2, 132.2 des première et deuxième renforts 130, 132 étant reliées entre elles de manière à former la deuxième extrémité 116.2 de la biellette 116.

Selon un mode de réalisation, chaque liaison pivotante 120 comprend une chape solidaire de la première extrémité 130.1, 132.1 du premier ou deuxième renfort 130, 132, supportant un axe 134 traversant une patte 136 solidaire de la paroi d'extrémité avant 82 ou du prolongement 94 à proximité de la paroi d'extrémité avant 82.

Selon une configuration, la biellette 116 comprend un renfort transversal 138 reliant les premier et deuxième renforts 130, 132 à proximité de leurs premières extrémités 130.1, 132.1. Ce renfort transversal 138 est espacé de la paroi d'extrémité avant 82 pour permettre le passage d'un conduit de fluide chaud 140.

Selon l'invention, l'attache moteur arrière 74 et les bielles de poussée 76 assurent la reprise des efforts respectivement selon les directions transversales horizontale et verticale Y, Z et selon la direction longitudinale X. La première attache moteur avant 90 assure la reprise des efforts selon les directions transversales horizontale et verticale Y, Z et la deuxième attache moteur avant 92 selon la direction transversale horizontale Y. Le fait que les première et deuxième attaches moteurs avant 90, 92 comprennent chacune une liaison pivotante glissante orientée selon la direction longitudinale X permet aux première et deuxième attaches moteurs avant 90, 92 de pouvoir absorber les mouvements selon la direction longitudinale X du moteur par rapport à la structure primaire 68 du mât. La présence des liaisons pivotantes 120 permet à la biellette 116 d'absorber les mouvements selon la direction transversale verticale Z.

Selon une autre caractéristique, les première et deuxième liaisons pivotantes glissantes 98 et 118 sont les plus espacées possible afin d'assurer une meilleure reprise d'un moment selon la direction longitudinale X ainsi qu'une réduction des efforts dans les première et deuxième attaches moteurs avant 90, 92.

Le fait de prévoir un prolongement 94 et une biellette 116 permet d'obtenir une structure évidée à l'avant de la structure primaire 68, facilitant l'intégration des équipements et notamment du conduit de fluide chaud 140.

Le prolongement 94 et la biellette 116 permettent de réduire la longueur de la structure primaire 68 et d'en simplifier sa conception.

## Revendications

1. Ensemble propulseur d'aéronef comprenant un moteur (62) présentant un cœur de réacteur (64) et un carter de soufflante (66), une structure primaire (68) d'un mât ainsi qu'une attache moteur (70) présentant une attache moteur arrière (74), un couple de bielles de poussée (76), une première attache moteur avant (90) reliant la structure primaire (68) et le cœur de réacteur (64) ainsi qu'une deuxième attache moteur avant (92) reliant la structure primaire (68) et le carter de soufflante (66),
- la première attache moteur avant (90) comprenant :
∘ un prolongement (94) positionné à l'avant de la structure primaire (68), présentant une première extrémité (94.1) reliée à la structure primaire (68) et une deuxième extrémité (94.2) distante de la structure primaire (68),
o au moins une manille (96),
o une première liaison pivotante glissante (98) orientée selon une direction longitudinale (X) parallèle à un axe de rotation (22) du moteur, présentant un premier axe de pivotement (A98) approximativement parallèle à la direction longitudinale (X), reliant la deuxième extrémité (94.2) du prolongement (94) et la manille (96) et intégrant une rotule,
o au moins une liaison moteur (100) reliant la manille (96) et le cœur de réacteur (64) du moteur,
- la deuxième attache moteur avant (92) comprenant :
o une biellette (116) qui s'étend entre des première et deuxième extrémités (116.1, 116.2),
∘ une deuxième liaison pivotante glissante (118) orientée selon la direction longitudinale (X), présentant un deuxième axe de pivotement (A118) approximativement parallèle à la direction longitudinale (X), reliant la deuxième extrémité (116.2) de la biellette (116) et le carter de soufflante (66) et intégrant une rotule,
o au moins une liaison pivotante (120), présentant un axe de pivotement (A120) approximativement parallèle à une direction transversale horizontale (Y), reliant la première extrémité (116.1) de la biellette (116) et la structure primaire (68).

2. Ensemble propulseur d'aéronef selon la revendication 1, **caractérisé en ce que** la première attache moteur avant (90) comprend deux liaisons moteurs (100) espacées selon la direction transversale horizontale (Y), comportant chacune un axe de liaison (106) orienté de manière parallèle à la direction longitudinale (X), un orifice traversant dans la manille (96) pour loger une partie de l'axe de liaison (106) et un orifice traversant dans au moins une aile (108) solidaire du cœur de réacteur (64) du moteur pour loger une partie de l'axe de liaison (106).

3. Ensemble propulseur d'aéronef selon la revendication précédente, **caractérisé en ce que** la manille (96) est disposée dans un plan approximativement transversal, **en ce qu'**elle est triangulaire et comprend à un premier sommet un orifice traversant (102) pour la première liaison pivotante glissante (98) et aux autres sommets les orifices traversants des liaisons moteurs (100).

4. Ensemble propulseur d'aéronef selon la revendication 2 ou 3, **caractérisé en ce que** chaque liaison moteur (100) comprend une rotule intercalée entre l'axe de liaison (106) et l'orifice traversant de la manille (96).

5. Ensemble propulseur d'aéronef selon l'une des revendications précédentes, **caractérisé en ce que** la première liaison pivotante glissante (98) comprend un premier axe cylindrique (98.1) solidaire du prolongement (94) ainsi qu'une première bague de guidage (104) intégrant une rotule, positionnée dans un orifice traversant (102) de la manille (96) et configurée pour loger le premier axe cylindrique (98.1).

6. Ensemble propulseur d'aéronef selon l'une des revendications précédentes, **caractérisé en ce que** le prolongement (94) comprend des premier et deuxième renforts triangulaires (110, 112) comportant chacun un premier côté (110.1, 112.1) positionné contre une paroi d'extrémité avant (82) de la structure primaire (68), prolongeant un premier panneau latéral (86) de la structure primaire (68) pour le premier renfort triangulaire (100) et un deuxième panneau latéral (88) de la structure primaire (68) pour le deuxième renfort triangulaire (112), un deuxième côté (110.2, 112.2) prolongeant un longeron inférieur (80) de la structure primaire (68) ainsi qu'un troisième côté (110.3, 112.3) relié au deuxième côté (110.2, 112.2) au niveau d'un sommet (114.1, 114.2) distant du premier côté (110.1, 112.1), les sommets (114.1, 114.2) des premier et deuxième renforts triangulaires (110, 112) étant reliés entre eux pour former la deuxième extrémité (94.2) du prolongement (94).

7. Ensemble propulseur d'aéronef selon l'une des revendications précédentes, **caractérisé en ce que** la deuxième attache moteur avant (92) comprend deux liaisons pivotantes (120) espacées selon la direction transversale horizontale (Y).

8. Ensemble propulseur d'aéronef selon la revendication précédente, **caractérisé en ce que** la biellette (116) comprend des premier et deuxième renforts (130, 132) présentant chacun une première extrémité (130.1, 132.1) reliée à la structure primaire (68) par l'une des liaisons pivotantes (120) et une deuxième extrémité (130.2, 132.2) orientée vers le carter de soufflante (66), les deuxièmes extrémités (130.2, 132.2) des première et deuxième renforts (130, 132) étant reliées entre elles pour former la deuxième extrémité (116.2) de la biellette (116).

9. Ensemble propulseur d'aéronef selon la revendication précédente, **caractérisé en ce que** la biellette (116) comprend un renfort transversal (138) reliant les premier et deuxième renforts (130, 132) à proximité de leurs premières extrémités (130.1, 132.1).

10. Ensemble propulseur d'aéronef selon l'une des revendications précédentes, **caractérisé en ce que** la deuxième liaison pivotante glissante (118) comprend un deuxième axe cylindrique (118.1) solidaire de la deuxième extrémité (116.2) de la biellette (116) ainsi qu'une deuxième bague de guidage (126) intégrant une rotule, positionnée dans un orifice traversant (124) d'au moins une aile (122) solidaire du carter de soufflante (66) et configurée pour loger le deuxième axe cylindrique (118.1).

11. Ensemble propulseur d'aéronef selon la revendication précédente, **caractérisé en ce que** l'aile (122) comprend deux parties (122.1, 122.2) présentant un plan de jonction (PJ) positionné de manière à séparer l'orifice traversant (124) en deux demi-cylindres, ainsi que des éléments de liaison (128) configurés pour maintenir les deux parties (122.1, 122.2) de l'aile (122) assemblées.

12. Aéronef comprenant au moins un ensemble propulseur selon l'une des revendications précédentes.

## Patentansprüche

1. Antriebseinheit für ein Luftfahrzeig mit einem Triebwerk (62), das ein Kerntriebwerk (64) und ein Gebläsegehäuse (66), eine Primärstruktur (68) eines Pylons und einem Triebwerksaufhängung (70) aufweist, die über eine hintere Triebwerksaufhängung (74) , ein Paar Schubstangen (76), einen ersten vorderen Triebwerksaufsatz (90), der die Primärstruktur (68) und den Reaktorkern (64) verbindet, sowie einen zweiten vorderen Triebwerksaufsatz (92), der die Primärstruktur (68) verbindet. und das Lüftergehäuse (66),
- der erste Frontmotoraufsatz (90) umfassend:
∘ eine an der Vorderseite der Primärstruktur (68) angeord-nete Verlängerung (94), die ein mit der Primärstruktur (68) verbundenes erstes Ende (94.1) und ein von der Pri-märstruktur (68) entferntes zweites Ende (94.2) aufweist,
∘ mindestens ein Schäkel (96),
∘ eine in einer Längsrichtung (X) parallel zu einer Dreh-achse (22) des Triebwerks ausgerichtete erste Gleit-schwenkkulisse (98) mit einer etwa parallel zur Längsrich-tung (X) verlaufenden ersten Schwenkachse (A98), die die zweites Ende (94.2) der Verlängerung (94) und des Schäkels (96) mit Kugelgelenk,
o mindestens eine Triebwerksverbindung (100), die den Schäkel (96) und den Reaktorkern (64) des Triebwerks verbindet,
- wobei der zweite Frontmotoraufsatz (92) umfasst:
∘ eine Pleuelstange (116), die sich zwischen dem ersten und zweiten Ende (116.1, 116.2) erstreckt,
∘ eine in Längsrichtung (X) ausgerichtete zweite Gleit-schwenkkulisse (118) mit einer etwa parallel zur Längs-richtung (X) verlaufenden zweiten Schwenkachse (A118), die das zweite Ende (116.2) des Pleuels (116) verbindet und das Lüftergehäuse (66) und ein Kugelgelenk enthält,
∘ mindestens einen Schwenklenker (120) mit einer etwa parallel zu einer horizontalen Querrichtung (Y) verlaufen-den Schwenkachse (A120), der das erste Ende (116.1) des Lenkers (116) und die Primärstruktur (68) verbindet.

2. Flugzeugantriebsaggregat nach Anspruch 1, **dadurch gekennzeichnet, dass** der erste vordere Triebwerksaufsatz (90) zwei in horizontaler Querrichtung (Y) beabstandete Triebwerksanschlüsse (100) mit jeweils einer parallel zu ausgerichteten Verbindungsachse (106) aufweist der Längs-richtung (X), ein Durchgangsloch im Schäkel (96) zur Aufnahme eines Teils des Verbindungsstifts (106) und ein Durchgangsloch in mindestens einem Flügel (108), der mit dem Kern des Reaktors (64) des Triebwerks verbunden ist um einen Teil des Verbindungsstifts (106) aufzunehmen.

3. Flugzeugtreibsatz nach dem vorhergehenden An-spruch, **dadurch gekennzeichnet, dass** der Bügel (96) in einer etwa quer verlaufenden Ebene angeordnet ist, dass er dreieckig ist und an einem ersten Scheitel eine Durch-gangsöffnung (102) für den ersten Verbindungsgleitzapfen (98) aufweist und an den anderen Spitzen die Durch-gangslöcher der Motoranschlüsse (100).

4. Flugzeugantriebsanordnung nach Anspruch 2 oder 3, **dadurch gekennzeichnet, dass** jede Triebwerksverbindung (100) ein Kugelgelenk umfasst, das zwischen dem Verbin-dungsstift (106) und der Durchgangsöffnung des Schäkels (96) angeordnet ist.

5. Flugzeugantriebseinheit nach einem der vorhergehenden Ansprüche, **dadurch gekennzeichnet, dass** die erste verschiebbare Schwenkverbindung (98) eine mit dem Fortsatz (94) einstückige erste Zylinderachse (98.1) sowie einen ersten Führungsring (104) mit einer Kugel umfasst Gelenk, positioniert in einem Durchgangsloch (102) des Schäkels (96) und konfiguriert, um die erste zylindrische Welle (98.1) aufzunehmen.

6. Flugzeugtreibstoffanordnung nach einem der vorhergehenden Ansprüche, **dadurch gekennzeichnet, dass** die Verlängerung (94) erste und zweite dreieckige Verstärkun-gen (110, 112) umfasst, von denen jede eine erste Seite (110.1, 112.1) umfasst, die an einer Wand des vorderen Endes (82) positioniert ist. der Primärstruktur (68), wobei eine erste Seitenplatte (86) der Primärstruktur (68) für die erste dreieckige Verstärkung (100) und eine zweite Seitenplatte (88) der Primärstruktur (68) für die zweite verlängert wird Dreiecksverstärkung (112), eine zweite Seite (110.2, 112.2), die einen unteren Holm (80) der Primärstruktur (68) verlängert sowie eine dritte Seite (110.3, 112.3), die mit der zweiten Seite (110.2, 112.2) verbunden ist bei einen von der ersten Seite (110.1, 112.1) entfernten Scheitel (114.1, 114.2), wobei die Scheitel (114.1, 114.2) der ersten und zweiten dreieckigen Verstärkungen (110, 112) miteinander verbunden sind, um das zweite Ende (94.2) der Erweiterung (94).

7. Flugzeugantriebsaggregat nach einem der vorhergehenden Ansprüche, **dadurch gekennzeichnet, dass** der zweite vordere Triebwerksaufsatz (92) zwei in horizontaler Querrichtung (Y) beabstandete Schwenkverbindungen (120) um-fasst.

8. Flugzeugantriebsanordnung nach dem vorhergehenden Anspruch, **dadurch gekennzeichnet, dass** die Verbindung (116) erste und zweite Verstärkungen (130, 132) umfasst, von denen jede ein erstes Ende (130.1, 132.1) aufweist, das mit der Primärstruktur (68) durch eine der die Schwenklenker (120) und ein dem Lüftergehäuse (66) zuge-wandtes zweites Ende (130.2, 132.2), wobei die zweiten Enden (130.2, 132.2) der ersten und zweiten Verstärkung (130, 132) miteinander verbunden sind, um die zweite zu bilden Ende (116.2) der Stange (116) .

9. Flugzeugtreibstoffanordnung nach dem vorhergehen-den Anspruch, **dadurch gekennzeichnet, dass** das Glied (116) eine Querverstärkung (138) umfasst, die die ersten und zweiten Verstärkungen (130, 132) nahe ihren ersten Enden (130.1, 132.1) verbindet.

10. Flugzeugtreibstoffanordnung nach einem der vorhergehenden Ansprüche, **dadurch gekennzeichnet, dass** die zweite verschiebbare Schwenkverbindung (118) eine mit dem zweiten Ende (116.2) der Pleuelstange (116) einstückige zweite Zylinderachse (118.1) sowie eine zweite Führungs-ring (126) mit einer Kugel, positioniert in einer Durchgangsöffnung (124) von mindestens einem Flügel (122), der einstückig mit dem Lüftergehäuse (66) ist und konfiguriert ist, um die zweite zylindrische Welle (118.1) aufzunehmen.

11. Flugzeugantriebsanordnung nach dem vorhergehenden Anspruch, **dadurch gekennzeichnet, dass** der Flügel (122) aus zwei Teilen (122.1, 122.2) mit einer Verbindungsebene (PJ) besteht, die so positioniert ist, dass sie die Durchgangsöffnung (124) in zwei Halbzylinder trennt, als sowie Verbindungselemente (128), die konfiguriert sind, um die beiden Teile (122.1, 122.2) des Flügels (122) zusammenge-baut zu halten.

12. Luftfahrzeug mit mindestens einer Antriebseinheit nach einem der vorhergehenden Ansprüche.

## Claims

1. Aircraft propulsion assembly comprising an engine (62) having a reactor core (64) and a fan casing (66), a primary structure (68) of a pylon, and also an engine attachment (70) having a rear engine attachment (74), a pair of thrust rods (76), a first front engine attachment (90) connecting the primary structure (68) and the reactor core (64), and also a second front engine attachment (92) connecting the primary structure (68) and the fan casing (66),
- the first front engine attachment (90) comprising:
o a continuation (94) positioned at the front of the primary structure (68), having a first end (94.1) connected to the primary structure (68) and a second end (94.2) remote from the primary structure (68),
o at least one shackle (96),
o a first sliding and pivoting connection (98) oriented in a longitudinal direction (X) parallel to an axis of rotation (22) of the engine, having a first pivot axis (A98) approximately parallel to the longitudinal direction (X), connecting the second end (94.2) of the continuation (94) and the shackle (96) and incorporating a ball,
o at least one engine connection (100) connecting the shackle (96) and the reactor core (64) of the engine,
- the second front engine attachment (92) comprising:
∘ a link rod (116) which extends between a first and a second end (116.1, 116.2),
o a second sliding and pivoting connection (118) oriented in the longitudinal direction (X), having a second pivot axis (A118) approximately parallel to the longitudinal direction (X), connecting the second end (116.2) of the link rod (116) and the fan casing (66) and incorporating a ball,
o at least one pivoting connection (120), having a pivot axis (A120) approximately parallel to a horizontal transverse direction (Y), connecting the first end (116.1) of the link rod (116) and the primary structure (68).

2. Aircraft propulsion assembly according to Claim 1, **characterized in that** the first front engine attachment (90) comprises two engine connections (100) which are spaced apart in the horizontal transverse direction (Y) and each of which has a connection pin (106) oriented parallel to the longitudinal direction (X), a through-orifice in the shackle (96) for housing part of the connection pin (106), and a through-orifice in at least one flange (108) secured to the reactor core (64) of the engine for housing part of the connection pin (106).

3. Aircraft propulsion assembly according to the preceding claim, **characterized in that** the shackle (96) is disposed in an approximately transverse plane, **in that** it is triangular and comprises at a first vertex a through-orifice (102) for the first sliding and pivoting connection (98) and at the other vertices the throughorifices of the engine connections (100).

4. Aircraft propulsion assembly according to Claim 2 or 3, **characterized in that** each engine connection (100) comprises a ball interposed between the connection pin (106) and the through-orifice in the shackle (96).

5. Aircraft propulsion assembly according to one of the preceding claims, **characterized in that** the first sliding and pivoting connection (98) comprises a first cylindrical pin (98.1) secured to the continuation (94) and also a first guiding ring (104) incorporating a ball, positioned in a through-orifice (102) of the shackle (96) and configured to house the first cylindrical pin (98.1).

6. Aircraft propulsion assembly according to one of the preceding claims, **characterized in that** the continuation (94) comprises first and second triangular reinforcements (110, 112), each of which has a first side (110.1, 112.1) positioned against a front end wall (82) of the primary structure (68), continuing a first lateral panel (86) of the primary structure (68) for the first triangular reinforcement (100) and a second lateral panel (88) of the primary structure (68) for the second triangular reinforcement (112), a second side (110.2, 112.2) continuing a lower spar (80) of the primary structure (68), and also a third side (110.3, 112.3) connected to the second side (110.2, 112.2) at a vertex (114.1, 114.2) remote from the first side (110.1, 112.1), the vertices (114.1, 114.2) of the first and second triangular reinforcements (110, 112) being connected to one another so as to form the second end (94.2) of the continuation (94) .

7. Aircraft propulsion assembly according to one of the preceding claims, **characterized in that** the second front engine attachment (92) comprises two pivoting connections (120) spaced apart in the horizontal transverse direction (Y) .

8. Aircraft propulsion assembly according to the preceding claim, **characterized in that** the link rod (116) comprises first and second reinforcements (130, 132), each of which has a first end (130.1, 132.1) connected to the primary structure (68) via one of the pivoting connections (120) and a second end (130.2, 132.2) oriented towards the fan casing (66), the second ends (130.2, 132.2) of the first and second reinforcements (130, 132) being connected to one another so as to form the second end (116.2) of the link rod (116).

9. Aircraft propulsion assembly according to the preceding claim, **characterized in that** the link rod (116) comprises a transverse reinforcement (138) connecting the first and second reinforcements (130, 132) close to their first ends (130.1, 132.1).

10. Aircraft propulsion assembly according to one of the preceding claims, **characterized in that** the second sliding and pivoting connection (118) comprises a second cylindrical pin (118.1) secured to the second end (116.2) of the link rod (116), and also a second guiding ring (126) incorporating a ball, positioned in a through-orifice (124) in at least one flange (122) secured to the fan casing (66) and configured to house the second cylindrical pin (118.1).

11. Aircraft propulsion assembly according to the preceding claim, **characterized in that** the flange (122) comprises two parts (122.1, 122.2) having a joining plane (PJ) positioned so as to separate the through-orifice (124) into two half-cylinders, and also connection elements (128) configured to keep the two parts (122.1, 122.2) of the flange (122) in the assembled state.

12. Aircraft comprising at least one propulsion assembly according to one of the preceding claims.
